Europäisches Patentamt

European Patent Office

Office européen des brevets

(11) Publication number: **0 020 764**
**B1**

(12) **EUROPEAN PATENT SPECIFICATION**

(45) Date of publication of patent specification: **24.06.87**

(21) Application number: **78900237.5**

(22) Date of filing: **02.10.78**

(86) International application number:
**PCT/JP78/00001**

(87) International publication number:
**WO 80/00756 17.04.80 Gazette 80/08**

(51) Int. Cl.⁴: **G 05 B 19/04,** G 04 F 3/00,
H 03 K 23/40, H 03 K 17/28

(54) **SEQUENCE CONTROL SYSTEM.**

(43) Date of publication of application:
**07.01.81 Bulletin 81/01**

(45) Publication of the grant of the patent:
**24.06.87 Bulletin 87/26**

(84) Designated Contracting States:
**FR**

(56) References cited:
**DE-A-2 333 116**
**FR-A-2 356 984**
**FR-A-2 400 229**
**JP-A-12 008 651**
**JP-A-49 056 090**
**JP-A-49 082 395**
**JP-A-50 066 111**
**JP-A-51 013 458**
**JP-A-51 146 687**
**JP-A-52 041 780**

**Machine Design vol. 48 No. 27 (1976-11)**

(73) Proprietor: **KUZE, Yoshikazu**
**31-3 Higashi Magome 1-chome**
**Ohta-Ku, Tokyo143 (JP)**

(72) Inventor: **KUZE, Yoshikazu**
**31-3 Higashi Magome 1-chome**
**Ohta-Ku, Tokyo143 (JP)**

(74) Representative: **Rodhain, Claude**
**Cabinet Claude Rodhain 30, rue la Boétie**
**F-75008 Paris (FR)**

## Description

### Technical field

The present invention relates to a sequence controller, and more particularly to a programmable logic controller (PLC) of a stored program type with which data programming and its modification can be done extremely easily and rapidly.

### Background art

Heretofore, various kinds of sequence controllers such as a diode matrix system, quasi-computer system, or computer system have been used in the control art. However, for controlling multiple subjects with such a conventional system, a very complicated and expensive sequence control system is required. Moreover, in order to carry out the programming and changing thereof, skilled programmers are required. Therefore, in case that there is no person available for such purposes, the programming is often made by a third person, which will result in the leakage of user's original technical know-how to the outside. The present invention is to provide a sequence controller with which programming of control data and modification of the program can be done easily and rapidly by those unskilled in the art.

FR—A—2 356 984 discloses a sequence controller having a number of parallel connected outputs for the automatic control of a number of machines, each connected to one of the outputs, wherein in the "read" mode of the controller each machine is driven by a sequence of binary data, stored in a memory, the number of which data is the same in each cycle of operations for each machine and wherein in the "write" mode of the controller the sequence of said binary data is written into the memory comprising a clock pulse generating circuit, a "1" writing switch and a "0" writing switch, a read start switch, a binary counter, at least one memory connected to said binary counter so as to be addressed thereby, and gate means for controlling said binary counter by operating said read start switch. .

In this system the programming and the modification of programs are carried out by means of a "sheet reader" that reads memory sheets on which the time chart is written by means of white and black dots. This uses a supplemental device that raises the cost and introduces errors. Such errors cannot be detected by the operator.

Moreover, any modification of the operation sequence needs the preparation of a new memory sheet.

JP—A—128651-74 concerns a timer system for selecting programs on a TV set at predetermined times and discloses the use of a keyboard for entering binary data in a memory.

### Disclosure of the invention

It is the object of the present invention to provide a novel and improved sequence controller which enables anybody to easily and rapidly program data for sequence control and to modify the program thus made, and which has a considerably improved performance and may be designed so compact as to be held in the hand.

According to the invention, the sequence controller comprises a keyboard switch for presetting a number of said binary data, an encoder connected to said keyboard switch for converting said number into the corresponding BCD coded signal, at least one shift register connected to the output of said encoder, a presettable counter, the preset inputs of which are connected to the shift register and the clock input of which is connected to said clock pulse generating circuit for counting the number of clock pulses preset by the keyboard switch, first gate means for presetting the presettable counter by operating said "1" writing switch or said "0" writing switch, second gate means for controlling the counting of said presettable counter by operating said "1" writing switch and said "0" writing switch, third gate means connected between the output of said presettable counter and said second gate means for closing said second gate means when the counting of said presettable counter reaches the preset number and fourth gate means connected between the output of said binary counter and said second gate means for closing second gate means when said binary counter reaches the maximum address count.

In the present invention, data for the sequence control are divided into "1" ("black") data and "0" ("white") data and these data are written in the form of a time chart on a memory sheet. The "1" data is indicated with a black dot and the "0" data is indicated with a white dot. The number of the dot is adapted to correspond the number of the write-in timing clock pulses in the control system. By pushing a "black" key and a "white" key on a keyboard the times corresponding the number of each dot, "1" data and "0" data are written in a memory of the sequence control system.

The sequence control system according to the present invention provides, for example, outputs for 16 channels as a standard type. For the convenience of explanation, assume here that the system of the present invention employs a memory of 1024 words×1 bit for one cycle and that 16 memories M1, M2 ... M16 are used for the total of 16 channels. It takes only several seconds to write the data for one channel into the memory. Consequently, writing the data for 16 channels may be done in only 2 or 3 minutes.

To read out the data stored in the memories, a desirable time scale factor is selected, and then a start switch is depressed. The data is read out repeatedly from the memories in the selected scale factor time.

The sequence control system according to the present invention is applicable for automation of various kinds of machines and installations such as machine tools, assembling machines, packaging machines, testing and inspecting machines, etc. Thus, the automation of the factory may be achieved at a reduced cost.

An emergency detector is provided separately. If the output is connected to the detection connector of the sequence control system, the output of the system is immediately stopped when any abnormal operation occurs. Further, by coupling the extension connectors of the control system with each other, the number of the channels of the sequence control can be increased.

The memory employed in the present invention is a C-MOS RAM which consumes a very small power and thus can be backed up by batteries. In addition, to cope with any accidental power failure, a power failure detection circuit and flip-flop are provided. Thus, the sequence control system according to the present invention makes it possible to avoid any confusion or trouble which will occur due to power failure or unforeseen recovery of the power supply.

Brief description of the drawings

Fig. 1 shows a memory sheet for sequence time chart used in the sequence control system according to the present invention;

Fig. 2 shows an example of the time chart written in the memory sheet of Fig. 1 and a digital indication of the time chart in which the period of the time by the black section and that of blank section are converted to the number of the black dot and the number of the white dot for each channel.

Fig. 3 is a plan view of a sequence controller according to the present invention.

Fig. 4 shows a power circuit including a power failure detecting circuit,

Fig. 5 is a diagram of the sequence control system according to the present invention,

Fig. 6 shows a select switch circuit,

Fig. 7 shows a key switch device using a diode matrix,

Fig. 8 is a timing diagram,

Fig. 9 shows a circuit for clearing the count "0" in a binary counter,

Fig. 10 is a timing diagram for the circuit of Fig. 9,

Fig. 11 is a diagram illustrating the interconnection between a down counter, preset code switches and shift register when 1,000 timing clock pulses are used for write,

Fig. 12 is a diagram illustrating the interconnection between the binary counter and memories when 1,000 timing clock pulses are used for write,

Fig. 13 is a diagram of a display device,

Fig. 14 is an explanatory diagram in which two sequence controllers are connected for increasing the number of the channels,

Fig. 15 shows another example of the binary counter,

Figs. 16, 17, 18 and 19 illustrate further examples of memory, respectively, and

Fig. 20 shows an example of the memory sheet for use when 1,000 timing clock pulses are used for write.

Best mode for embodying the invention

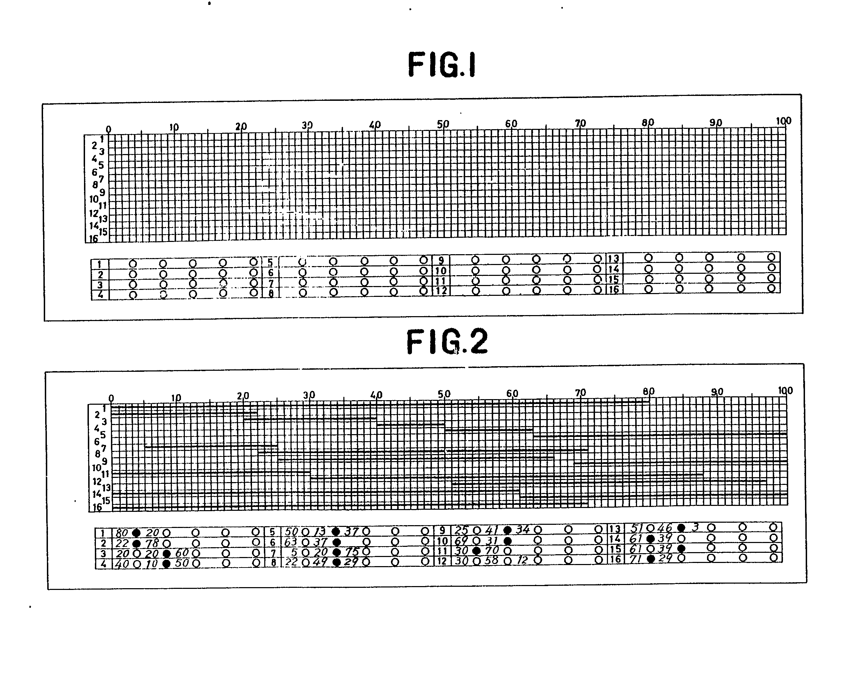

Referring now to Fig. 1 illustrating an example of a memory sheet for a sequence time chart, the numerals 0 to 100 of the upper row indicate the number of timing clock pulses to be generated in one cycle of operations, while the numerals 1—16 arranged vertically along the lefthand edge depict the number of the channel or sequence stage. As shown in Fig. 2, a sequence time chart is prepared in the upper part, and in the lower part, the above time chart is indicated digitally by the number of the black sections "1" and "white" sections "0" in each channel. For example, the time chart for the first channel consists of 80 black dots and 20 white dots. That is to say, a complete cycle of operations for the first channel consists of 80 successive data "1" and 20 successive data "0". The second channel has 22 successive data "1" and 78 successive data "0". In this way, the time charts for the 16 parallel sequence stages are shown in the lower part of the memory sheet.

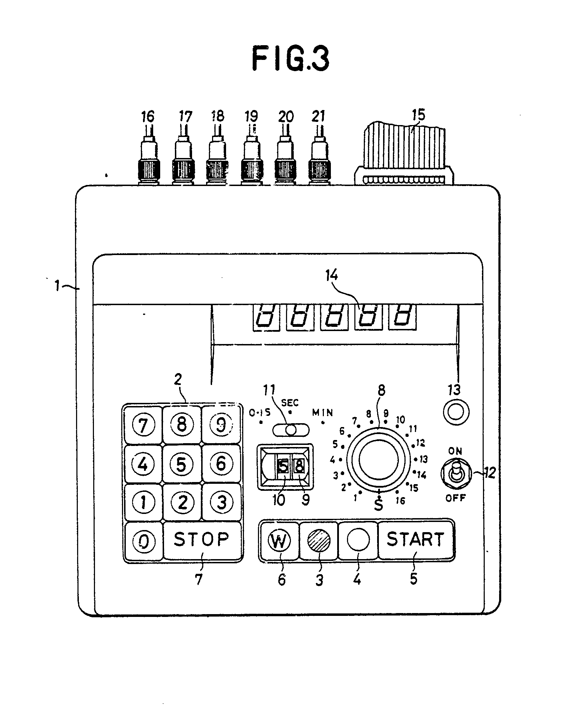

Fig. 3 is a top plan view of the sequence controller according to the present invention. The reference numeral 1 depicts a case; 2, keyboard; 3, black dot switch for "1" data; 4, white dot switch for "0" data; 5, start switch; 6, write (W) switch; 7, stop switch; 8, channel select switch; 9 and 10 depict preset code switches, respectively. Digits (5, 8) displayed in the switches 9, 10 mean the elementary cycle period and any desired elementary cycle period may be set by operating the switches. Further, the numeral 11 indicates a time scale factor select switch, and the numeral 12 designates a changeover switch. When the changeover switch is turned OFF only one cycle of operations is done, while the switch is turned ON, the cycle is repeated. The reference numeral 13 depicts a reset switch; 14, count display; 15, ribbon cable; 16, and 17, abnormality detection connectors, respectively. Numerals 18 and 19 designate extension connectors, 20, connector for connection to remote-control stop switch; and 21 indicates a connector for connection to remote-control start switch. The sequence controller in accordance with the present invention is connected by means of the ribbon cable 15 to a relay device (not shown) which is separately provided to control the controlled system or load. The sequence control system of the present invention is constructed as described above, the operation will be briefly explained hereinafter.

Writing of data is started by the writing for the first channel indicated on the memory sheet. At first, the channel select switch 8 is set to the stage "1" on the dial scale, so that the corresponding memory M1 may be selected. Then, the write switch 6(W) is depressed. Since the number of black dots ("1" data) in the first channel is 80, the keys "8" and "0" in the key board 2 are depressed sequentially and the black dot switch 3 is pushed. Then, the keys "2" and "0" in the keyboard are depressed for the number of white dots and the white dot switch 4 is depressed. Thus, the data for the first channel is written and stored in the memory M1. Subsequently, proceeding is made to the second channel. More particularly, the channel select switch 8 is set to "2" to select the corresponding memory M2, the key "2" in the keyboard is depressed twice and the black dot switch 3 is pushed. Then the keys "7" and "8" are depressed and the white dot switch 4 is pushed. Now the data for the second channel is written into the memory M2. Similarly, the data for the remaining channels are written into the respective memories M3 to M16. It takes only 2 to 3 minutes to write all the data of 16 channels into the corresponding memory.

In order to read the data stored in the memories, a time scale factor is first determined. For this purpose, the preset code switches 9 and 10 and the select switch 11 are operated to select a necessary time scale factor. If the select switch 11 is set to "0.1 SEC" and digits "58" are set in the preset code switches 9 and 10, this means that a cycle time of 5.8 sec is provided. If the select switch 11 is set to "1 SEC", the cycle time is 58 sec. Further, setting the select switch 11 to "MIN" makes the cycle time 58 minutes. Each of the digits of the preset code switches 9 and 10 may be changed from "0" to "9". Accordingly, 297 time scale factors are available in total.

The ribbon cable 15 is connected to an output relay array (not shown) the output circuit of which is connected to an external load, and the start switch 5 is depressed. By placing the changeover switch 12 to OFF, the cycle of operations is completed only once. On the other hand, if the changeover switch 12 is set to ON, the cycle of operations will be repeatedly completed, thus, the intended operations continue in repeated manner. In this case, the data "1" drives the output circuit.

Fig. 4 illustrates the power circuit including a power failure detection circuit. This power circuit comprises a transformer 22, a rectifier circuit 23 and a constant-voltage integrated circuit 24 to provide a system voltage $V_B$. When the power circuit is turned on, the current flows through the emitter of a PNP transistor 25, resistor and a Zener diode 26 to the ground, thus the transistor 25 is turned on to supply a voltage VD to the memory system. When the power supply is interrupted, the transistor 25 is turned off, and the voltage of a battery 27 is applied through a diode 28 to the memory system to maintain the content of the memories. The battery for back-up of the memory may be lithium battery, alkali battery, or the like, which is high in energy density, or a chargeable Ni—Cd battery or the like. In case an Ni—Cd battery is used, a resistor 29 is connected in parallel to the diode 28. In case of a lithium or alkali battery being used, the above-mentioned resistor 29 should be eliminated.

The power failure detection circuit will now be explained below. The constant-voltage IC 24 is connected at the input side VA thereof to the base of a transistor 32 through a resistor 30 and Zener diode 31. During the main power being supplied, the transistor 32 is turned on, the output P of which is 0. However, when the main power is disconnected, the transistor 32 is turned off, its output P will be 1.

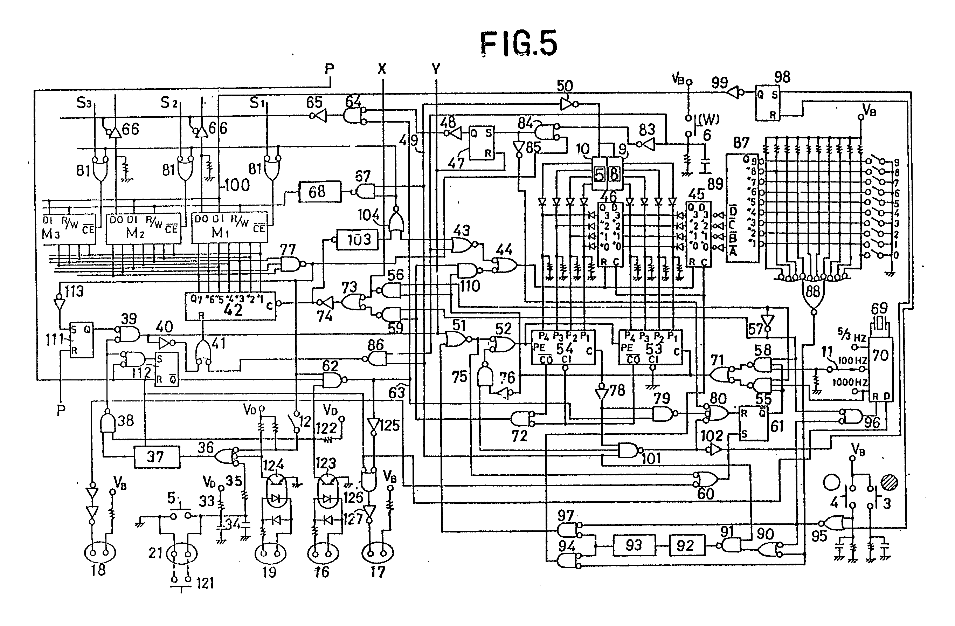

Referring now to Fig. 5, a diagram is illustrated of the subject sequence controller circuit in which 100 timing clock pulses for writing are used, that is, the memory addresses are 100 in number. In order to set each unit to the starting condition, the shortest time scale factor is set. To this end, the changeover switch 12 is placed OFF (for one cycle), the select switch 11 is set to "0.1 SEC", the preset code switches 9 and 10 are operated so as to set 01, and then the start switch 5 is depressed. The filter circuit formed with a resistor 33 and capacitor 34 eliminates chattering noise so that a signal 0 enters a 3-input NAND gate 36 through a gate protective resistor 35. By the output 1 from the gate 36, a one-shot pulse 1 appears at the output of a one-shot circuit 37. This signal is inverted through a 2-input NAND gate 38, so that a one-shot pulse 1 appears at the output of a 2-input NOR gate 39. By the one-shot pulse 1,

(A) A1 signal enters the reset R of a binary counter 42 to reset it to the zero state through an inverter 40 and 2-input NAND gate 41.

(B) A1 signal is applied to resets R of shift registers 45 and 46 through a 2-input NOR gate 43 and 2-input NAND gate 44 to reset each register to the zero state.

(C) The one-shot pulse 1 is also applied to a flip-flop 47 at the reset R thereof, so that the output 1 is produced at Q. The output changes the level of the line 49 to 0 through an inverter 48 and opens gates of the preset code switches 9 and 10, and

(D) A1 input is applied to preset enable inputs PE of BCD up/down counters 53 and 54 through a 2-input NOR gate 51 and 2-input NAND gate 52 to preset their respective contents.

The signal "0" on the line 49 causes a write clock pulse control gates 55 and 56 to be closed, and the signal is also applied through an inverter 57 to a read clock pulse control gates 58 and 59 to be opened.

Since the level of the line 49 is 0 and the level of an output line 63 of a 3-input NAND gate 62 is 0 as will be described later, the output of a 2-input NOR gate 64 is 1. The output signal is inverted by an inverter 65 and the 0 signal is applied to a 3-state buffer 66. Thus, the data output lines DO of memories M1, M2, . . . M16 will be opened.

Further, the 0 signal on the line 49 closes the gate of a 2-input NAND gate 67 and the output of which is fixed to 1. Read/write lines of the memories M1, M1, . . . M16 are fixed to 1 through a one-shot pulse generator circuit 68 so that each of the memories will be ready for read.

Clock pulses are generated by a crystal oscillator 69 the output of which is divided by a frequency divider 70 into 1000 Hz, and 5/3 Hz. Any one of these frequency divider outputs is selected by the select switch 11. The frequencies as 1000, 100 and 5/3 Hz of the outputs were selected to correspond with the number 100 of write timing clock pulses as in Fig. 2. In order to produce 100 pulses, it takes 0.1 sec. at 1000 Hz, 1 sec at 100 Hz and 1 minute at 5/3 Hz.

The frequency divider output is supplied through the select switch 11, read clock pulse control gate 58 and a 2-input NAND gate 71 to the clock lines C of the BCD up/down counters 53 and 54. Preset lines P1, P2, P3 and P4 of the BCD up/down counters are connected to the BCD lines of the preset code switches 9 and 10 and of the shift registers 45 and 46, respectively, by means of the diodes of their respective polarities as shown. Here, it is assumed that the BCD up/down counters are used as down counters by connecting the UP/DOWN terminals thereof to the ground (not shown).

Since the select switch 11 is set 0.1 sec (at 1000 Hz), the clock pulses are connected through the read clock pulse control gate 58 and the 2-input NAND gate 71 to the clock lines C of the BCD down counters 53 and 54. When the BCD down counters were preset, the setting 1 of the preset code switch 9 was written into the BCD down counter 53, and the setting 0 of the preset code switch 10 was written into the BCD down counter 54. Accordingly, a 0 enters from the carry output $\overline{CO}$ of the down counter 54 into a 2-input NOR gate 72. When one clock pulse enters the BCD down counter 53, the count thereof will decrease by 1 so that the already written 1 changes to 0. Thus, since both the two inputs of the 2-input NOR gate 72 are 0, the gate produces one read clock pulse. This signal is supplied through the read clock pulse control gate 59, a 2-input NAND gate 73 and an inverter 74 to the clock line C of the binary counter 42.

On the other hand, the output of the 2-input NOR gate 72 causes a 2-input NAND gate 75 to produce 0 when an inverter 76 produces output 1 by negative going clock input. Thus, BCD down counters 53 and 54 are preset through the 2-input NAND gate 52. At the same time, the "01" of the preset code switches is written against the BCD down counters 53 and 54.

When 100 read clock pulses are supplied to the input of the binary counter 42 in this manner, 100 addresses of the memories are addressed. At that time, a multi-input NAND gate 77, connected to the address lines of the binary counter 42 produces a one-cycle end signal 0. That is to say, since the binary number of 100 is 1100100, when 100 clock pulses are counted, outputs on address lines Q3, Q6 and Q7 will be 1. The outputs are fed to the multi-input NAND gate 77 thereby producing the signal 0.

Thus, the signal on the output line 63 fcom the 3-input NAND gate 62 changes to 1 and a 2-input NAND gate 79 produces an output 0 when an inverter 78 produces a 1 by the negative going clock input. Since the output 0 is applied through a 3-input NAND gate 80 to a reset input of a flip-flop 61, the output 0 of the output $\overline{Q}$ of the flip-flop causes the read pulse control gate 58 to be closed, thus the clock pulses being blocked.

Thus, all the gates are set up in line so that data may readily be written. It takes only 0.1 sec. to complete the read cycle after the start switch 5 is depressed.

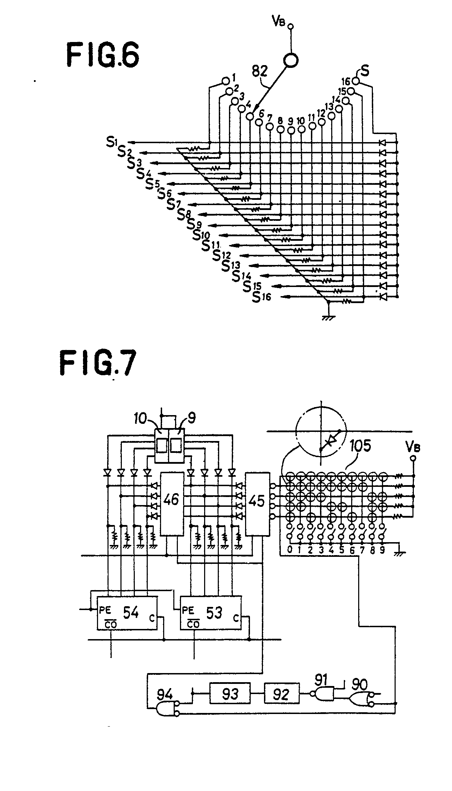

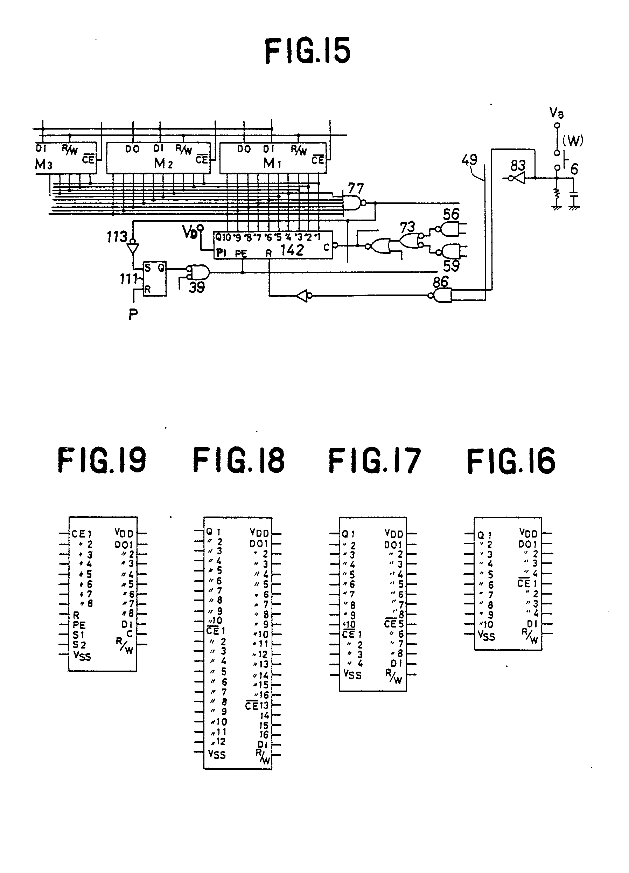

Writing of data is started beginning with the first channel. Namely, the channel select switch 8 is first set to "1". The channel select switch 8 comprises, as shown in Fig. 6, 16 contacts for 16 channels, and the outputs S1, S2, . . . S16 are connected to the Chip Enable inputs $\overline{CE}$ of memories M1, M2, . . . M16 through 2-input NAND gates 81, respectively.

Common contactor 82 of the channel select switch 8 is normally brought into contact with the contact S, so that output signals of the contacts 1, 2, 3, . . ., 16 are 1. Consequently, the output of each 2-input NAND gate 81 is 0 which is applied to the Chip Enable input $\overline{CE}$. Thus, all the memories are selected. Here, when the common contactor 82 is set to "1", the memory M1 is selected.

For the convenience of explanation, the embodiment described in the foregoing of the present invention employs one memory (C-MOS RAM) for each cycle, so 16 memory IC's in total. In practice, the present invention emplys 4, 8 or 16 sets of large-scale integrated circuits (LSI) provided with Data Outputs DO and Chip Enable inputs $\overline{CE}$, in a compact circuit configuration, as illustrated in Figs. 16, 17 and 18, respectively. Fig. 16 shows an example in which 4 memories of 1024 words×1 bit are used in parallel; Fig. 17 shows an example using 8 sets of such memories in parallel; and Fig. 18 shows an example using 16 sets of such memories also in parallel.

Thereafter, the write switch 6 (W) is depressed, thereby following operation will proceed.

(A) Output of an inverter 83 goes to a 0. Because the output of the multi-input NAND gate 77 is 0, output of a 2-input NOR gate 84 will be 1. The output 0 is applied through an inverter 85 to the 3-input NAND gate 80 the output of which in turn will go to a 1. This signal 1 is applied to the reset input R of the flip-flop 61 thereby $\overline{Q}$ output goes to a 0 which closes the read clock pulse control gate 58.

(B) The output 1 of the 2-input NOR gate 84 is also applied to the set input S of the flip-flop 47, so that the Q output will change to a 0 which in turn will be a 1 through the inverter 48. Therefore, the level of the line 49 is 1 thereby closing the gates of the preset code switches 9 and 10.

(C) Signal 1 on the line 49 causes the write clock pulse control gate 56 to open, while the read clock pulse control gate 5 is closed through the inverter 57.

(D) The output of a 2-input NAND gate 86 which receives 1 on the line 49 and 1 from the write switch 6 (W) will go to a 0 which is applied to the reset input R of the binary counter 42 through the 2-input NAND gate 41, so as to reset it.

(E) The signal 1 on the line 49 is applied to the 2-input NOR gate 64 the output of which will be 0 causing the output of the inverter 65 to go to 1. The output 1 is applied to the 3-state buffer 66 to close each Date Output line DO of the memories M1, M2, . . ., M16.

Inputs Q1, Q2, . . ., Q9 of an encoder 87 are pulled up through resistors, respectively, to $V_B$, and connected to the inputs of a multi-input AND gate 88, further connected via the switches 1, 2, ..., 9 to the ground. BCD outputs of the encoder 87 are connected to the shift register 45 through inverters 89, respectively.

To write 80 black dot data "1", first the key "8" in the keyboard 2 is depressed. The input Q8 of the encoder 87 which is connected to the key "8" go to 0, and a 4-bit binary code 1000 corresponding to the depressed key "8" appears at D0, D1, D2 and D3 of the shift register 45 through the BCD outputs $\overline{A}$, $\overline{B}$, $\overline{C}$ and $\overline{D}$ of the encoder 87. The output of the multi-input AND gate 88 will go to a 0 to provide 0 to the input of a 2-input NAND gate 90. Thus, the output of the gate 90 will be 1 and the output of a 2-input NAND gate 91 will be 0. This output 0 is applied via a delay circuit 92 to a one-shot pulse generator 93 to provide one-shot pulses 0. Then, the signal is inverted through a 2-input NOR gate 94 to provide one-shot pulses 1. Accordingly, one clock pulse is fed to the clock lines C of the shift registers 45 and 46. At that time, the above-mentioned binary code 1000 corresponding to the key "8" is shifted and appears at the output Q0, Q1, Q2 and Q3 of the shift register 45.

Subsequently, the black dot switch 3 is depressed, thereby causing the output of a 2-input NOR gate 95 to go to 0. During the black dot switch 3 being depressed, the output of a 2-input NOR gate 96 is 1 which is applied to the Reset input R of the frequency divider 70 which in turn will be reset to stop the generation of clock pulses.

The output 0 of the 2-input NOR gate 95 is also applied to the 2-input NAND gate 90, so that the one-shot pulse generator circuit 93 produces a one-shot pulse 1. The pulse is inverted by a 2-input NOR gate 97 to provide one-shot pulse 0. Consequently, the output of the 2-input NOR gate 51 changes to one-shot pulse 0 to preset the BCD down counters 53 and 54 through the 2-input NAND gate 52. Thus, the "0" in the shift register 45 is written into the BCD down counter 53, while the "8" in the shift register 46 is into the BCD down counter 54.

On the other hand, the one-shot pulse "0" from the 2-input NOR gate 51 is applied to the 2-input NAND gate 60, so that a signal 1 is applied to the Set input S of the flip-flop 61. Thus, the signal 1 at the output $\overline{Q}$ of the flip-flop causes the write clock pulse control gate 55 to be opened.

Since the signal 1 is applied to the set input S of a flip-flop 98, the output Q of the flip-flop is changed to 0 which is inverted by an inverter 99 to cause the level on the Data Input line 100 of memories to go to 1. Thus, the level of the Data Input line DI of the memories M1, M2, ... ., M16 goes to a 1.

When the black dot switch 3 is released, generation of the clock pulse is started. However, since the read clock pulse control gate 58 is closed which is connected to the select switch 11, clock pulse of 1000 Hz passes through the write clock

control gate 55 and the 2-input NAND gate 71, then on the one hand, to the clock line C of the BCD down counters 53 and 54, and on the other hand to the clock line C of the binary counter 42 through the write clock pulse control gate 56.

Write clock pulses are also applied to a delay circuit 103 and pass through a 2-input NOR gate 104, the 2-input NAND gate 67 and one-shot pulse generator circuit 68 to the Read/Write terminal of the memory M1 in synchronism with the clock pulse.

Since the addresses Q1, Q2, ... Q7 of the binary counter 42 are connected to the corresponding addresses, respectively, of the memory M1, a command at the R/W terminal, which is synchronous to the write clock pulse, causes the black dot data "1" to be written into the address cells of the memory M1. Since 80 write clock pulses are generated 80 black dot data "1" are written in the memory cells as described hereinafter.

Each time one clock pulse enters the BCD down counters 53 and 54, the count therein decreases by one. When the count goes down to zero, the upper figure is counted down and the lower figure is changed from "0" to "9". Since initial count in the counters is "80", when the first clock pulse enters the counters, the upper figure changes to "7" and the lower figure to "9". When the second clock pulse is received, the upper figure remains unchanged, while the lower figure changes to "8". When 80 clock pulses are applied, both BCD counters produce signals 0 at the Carry output $\overline{CO}$ thereof, while the 2-input NOR gate 72 provides 1.

With outputs 1 of the 2-input NOR gate 72 (with the negative going pulse of the 80th clock pulse), of the inverter 78 and on the line 49, the output of a 3-input NAND gate 101 goes to 0 to close the write clock pulse control gate 55 through the 3-input NAND gate 80 and flip-flop 61. Thus, the gate 55 will pass only 80 clock pulses of 1000 Hz.

The output 1 of the 3-input NAND gate 101 is applied to the reset input R of the flip-flop 98 through an inverter 102 so that the output Q thereof goes to 1. The output 1 is changed to 0 by the inverter 99, thereby changing the Data Input DI to "0".

To write 20 white dot data "0", the keys "2" and "0" in the key-board are depressed. Then, a binary code 0010 of "2" is shifted by means of the encoder 87 to the outputs Q0, Q1, Q2 and Q3 of the shift register 46, while a binary code 0000 of "0" is shifted to the outputs Q0, Q1, Q2 and Q3 of the shift register 45. After keys "20" are depressed, the white dot switch 4 is depressed. Then, the 2-input NOR gate 95 produces 0, so that, similarly to the case in which the black dot switch 3 is depressed, generation of clock pulse is stopped, the down counters 53 and 54 are preset. Therefore, the binary code 0000 at the BCD output of the shift register 45 is written in the down counter 53, while the code 0010 at the BCD output of the shift register 46 is written in the down counter 54. The write clock pulse control gate 55 is opened. By releasing the white dot switch 4,

clock pulses are provided. Thereafter, similarly to the case in which 80 black dot data "1" are written, when the BCD down counters count up to 20 clock pulses, the write clock pulse control gate 55 is closed, thus only 20 clock pulses are permitted to pass through the gate.

The 20 clock pulses to the binary counter 42 sequentially address the address cells of the memory M1 through the address lines. Since the level of the Data input DI has been changed to 0 upon completion of writing the previously mentioned 80 black dot data "1", 20 white dot data "0" are written one after another in the memory M1.

When a total of 100 clock pulses (including the previously applied 80 clock pulses) is completely applied, the output of the multi-input NAND gate 77 will be 0 to close the write clock pulse control gate through the flip-flop 66. Here, write of data for the first channel in the time chart as in Fig. 2, is over. Similarly, data in the remainders of the 16 channels in the time chart will be written in the M2, M3, . . ., M16.

To read the stored data, the channel select switch 8 is set to "S" to select all the memories and then the start switch 5 is depressed. For example, it is assumed that the preset code switches are set to "58", and the select switch 11 is placed at "0.1 SEC" (1000 Hz), thereby setting a cycle time of 5.8 sec. Each time 58 read clock pulses are applied to the BCD down counters, the 2-input NOR gate 72 produces one read clock pulse to the binary counter 42. Address cells of the memories are addressed via the address lines, and with R/W command "1", data for each of the 16 parallel channels are delivered sequentially from the Data outputs DO of the respective memories. When the binary counter 42 is applied with 100 read clock pulses, the multi-input NAND gate 77 produces "0" which is fed through the flip-flop 61 to the read clock pulse control gate 58 which will be closed. Thus, delivery of the data is stopped after one cycle of operations. If the changeover switch 12 is set to ON side (repetition), a one channel end signal "0" is applied through the changeover switch 12 to the 3-input NAND gate 36. This causes the same result as depressing the start switch 5. Thus, data for the 16 channels are read out repeatedly at the predetermined cycle time of 5.8 seconds.

Fig. 7 shows another embodiment of the key switch device using a diode matrix 105. Four-bit binary code of the diode matrix is connected to a corresponding BCD line of the shift register 45, and the output on the common line connected to each BCD line is applied on the clock lines of the shift registers 45 and 46 through the 2-input NAND gates 90 and 91, delay circuit 92, one-shot pulse generator circuit 93 and 2-input NOR gate 94. Other portions than the diode matrix 104 are similar to the elements in the previously described key switch device using the encoder, so they will now be explained.

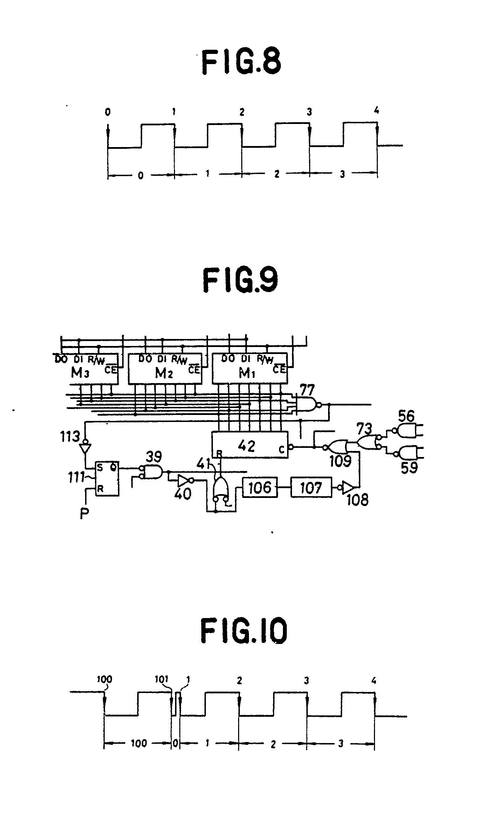

In order to write the data, the write switch 6 (W) is depressed. Then, as described above, the binary counter 42 is cleared to zero, and each time the write switch 6 (W) is depressed, signal 1 is applied to the 2-input NOR gate 43 of which the output 0 will provide 1 to each shift register at the Reset input R thereof through the 2-input NAND gate 44. The time chart has 100 data write blocks (see Fig. 2), but only 99 data can practically be written into the address cells of the memories as seen from the clock diagram in Fig. 8. Fig. 9 shows a gate device which permits complete write of data into 100 address cells, with the zero area eliminated. For this purpose, input of the 2-input NAND gate 41, which clears the binary counter 42, is further fed back to the clock line C of said binary counter 42 through a delay circuit 106, one-shot pulse generator circuit 107, inverter 108 and a 2-input NOR gate 109. Thus, as seen from the clock diagram in Fig. 10, 100 address cells can be completely filled with data. In this case, however, such an arrangement should be made that when the binary counter 42 counts 101 clock pulses, the multi-input NAND gate 77 produces 0, which leads to the completion of a cycle. Since the binary number of "101" is 1100101, the multi-input NAND gate 77 receives as input the address lines Q1, Q3, Q6 and Q7 as shown in Fig. 9.

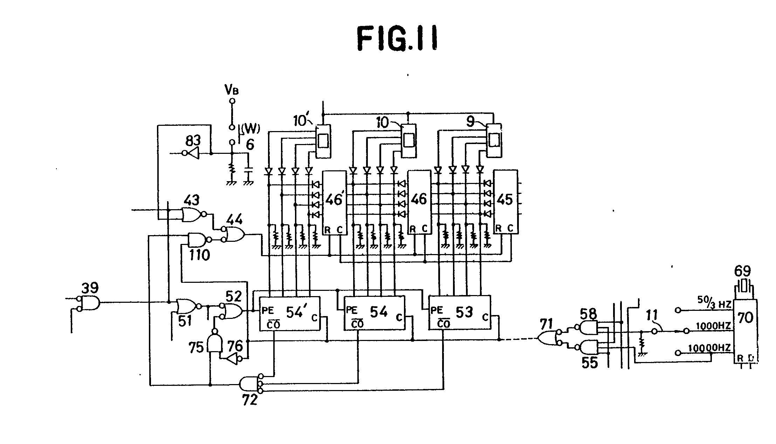

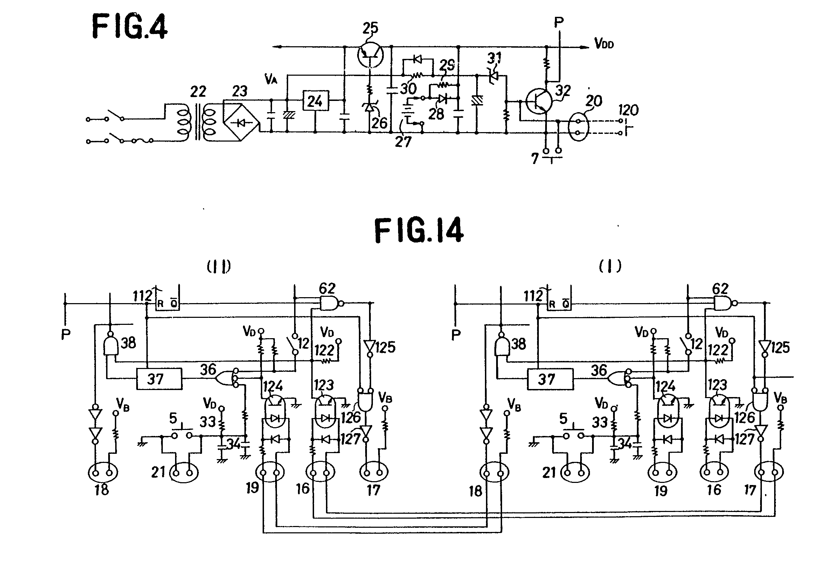

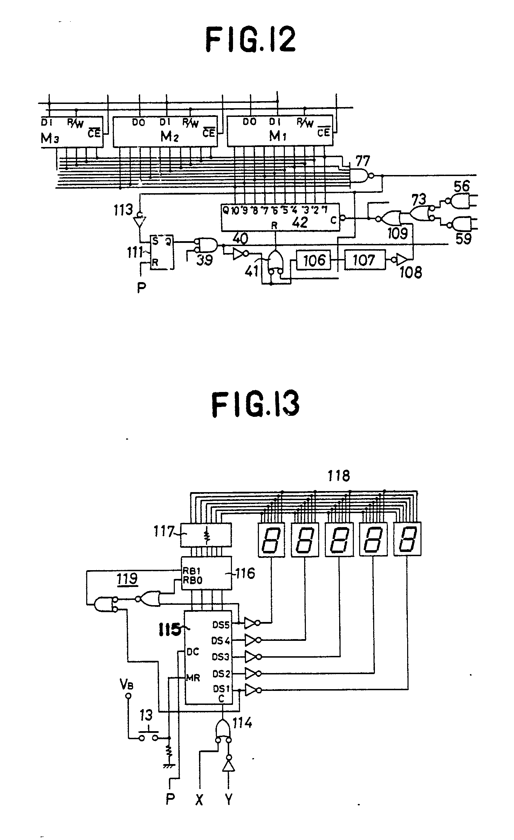

In the foregoing, the case in which 100 write clock pulses are used, have been described. However, a program chart of a higher precision can be prepared using 1,000 write clock pulses. In this case, the total of black and white dot data for one channel is 1,000. Accordingly, an intended work procedure may be distributed in a stroke with a precision such as 257 black dots and 743 white dots in total of 1,000. Of course, there are provided three preset code switches 9, 10 and 10', shift registers 45, 46 and 46', and down counters 53, 54 and 54', shown in Fig. 11. Further, as shown in Fig. 12, since the binary number of "1,001' is 1111101001, the binary counter 42 must have 10 address lines, and the multi-input NAND gate 77 receive input lines Q1, Q4, Q6, Q7, Q8, Q9 and Q10. Corresponding to 1,000 write timing clock pulses, the clock pulse outputs are 10,000 Hz, 1,000 Hz, and 50/3 Hz.

As apparent from the gate device shown in Fig. 11;

(A) Each time the write switch (W) is depressed, signal 1 is applied to the 2-input NOR gate 43 the output 0 of which will provide "1" to each shift register at the Reset input R thereof through the 2-input NAND gate 44.

(B) Upon each completion of one cycle, 1 is applied through the 2-input NOR gate 39, 2-input NOR gate 43 and 2-input NAND gate 44 to the Reset input R of each shift register.

(C) Each time the down counters have counted a preset number, each shift register is applied with 1 at the Reset input R thereof through a 2-input NAND gate 110 and the 2-input NAND gate 44.

Since each of the shift registers 45, 46 and 46' is cleared to zero as the case may be, it is possible to prevent the down counters 53, 54 and 54' from erroneously counting.

Here, the action taken against eventual power failure will be explained. When the power failure detector circuit detects a service interruption, signal at the output P thereof goes to a 1 so that 1 is applied to the Reset input R of a flip-flop 111 which will produce 1 at the output Q thereof. Even when the service is restored and the signal at the input R returns to 0, the signal at the output Q is mainted 1. Since 1 is applied to the input R of a flip-flop 112, 0 is produced at the output $\overline{Q}$ thereof, the signal level on the output line 63 from the 3-input NAND gate 62 changes to 1, and the 2-input NAND gate 79 produces 0 at the output thereof (because the inverter 78 produces 1 with the negative going clock pulse). This output signal 0 is applied through the 3-input NAND gate 80 and flip-flop 61 to the read clock pulse control gate 58 which in turn will be closed to stop the produce of output signals. Even after the service is restored, that state is maintained.

After the power restoration is made, the start switch 5 is turned on. Then, the 3-input NAND gate 36 is applied with 0, and the one-shot pulse generator circuit 37 produces one-shot pulses 1 to provide the 2-input NOR gate 39 with one-shot pulse 0 through the 2-input NAND gate 38. However, since the other input of the NOR gate 39 is maintained at 1 during the power failure and power restoration, the output of the 2-input NOR gate 39 is 0 so that the binary counter 42 is not cleared.

When the one-shot pulse generator circuit 37 produces one-shot pulse, one-shot pulse 0 appears at the 2-input NAND gate 38. This pulse is applied to the 2-input NAND gate 60 which produces 1 at the output thereof to open the read clock pulse control gate 58 through the flip-flop 61. Then, the binary counter 42 starts counting the remainder of the cycle when locked due to the power failure and produces data correspondingly. When the cycle is completed, the multi-input NAND gate 77 produces 0 at the output thereof to provide 1 to the set input S of the flip flop through an inverter 113, the signal at the output q of the flip-flop changing to 0. Thereafter, the normal state is restored and data are continuously read out corresponding to the cycle time.

Fig. 13 shows the count indicator which indicates, when in write mode, the respective numbers of data 1 and 0 for storage into the memories, and the production amount when in read mode. The output X of the write clock pulse control gate 56 and that of the 2-input NOR gate 39, namely, the signal Y obtained upon each completion of one cycle, are connected to a 2-input NAND gate 114 the output of which is connected to a dynamic driving decimal counter 115 at the Clock input C. BCD output of the decimal counter 115 is applied to a decoder driver 116. The output of the decoder driver is connected via a resistor 117 to the anode of each element of an indicator 118. The digit outputs DS1, DS2, DS3, DS4 and DS5 are connected to the cathode of each element of the indicator 118 through inverters. The output P of the power failure detection circuit is connected to the 3-state digit control terminal DC of said decimal counter 115.

The reference numeral 119 depicts a reading zero suppress circuit which suppresses the indication of unnecessary zeros. With the reset switch 13 depressed, signal at the master reset terminal MR of the decimal counter 115 goes to a 1 to clear all the count indications.

In case of writing, the indicator displays the accumulated numbers of black dot data 1 and white dot data 0 with write clock pulses from the line Y. The count indication is cleared by the reset switch 13 after it is confirmed for one cycle that a number of write clock pulses for one cycle is attained.

In reading, the number of products is displayed by the one cycle end signal from the line X. In power failure, a 1 is applied to the DC by the line P to make each digit line into a high impedance to close it thereby preventing the consumption of the power.

Describing the remote control circuit, the base of the transistor 32 and the ground are connected to a connector 20 (Fig. 4) and further connected to an outer stop switch 120. A connector 21 is connected to the start switch 5 and the further connector to an outer start switch 121. If the switch 120 is turned on, the output of the transistor 32 will be a 1 so that the output of the data stops. If the switch 120 is turned off, such the state is maintained. When the switch 121 is turned on, the data output is started.

Then, describing the abnormality detecting circuit, a collector of a photo transistor of a photo coupler 123, which is pulled up by a resistor 122 is connected to the ground through the emitter, and light emitting diode is connected to a connector 16 to which an outer abnormality detecting circuit is connected. When the detecting circuit detects any abnormality, the photo-coupler 123 turns on. Accordingly, the 3-input NAND gate 62 has the input 0 while its output goes to 1. Through the 2-input NAND gate 79, 3-input NAND gate 80 and flip-flop 61, the read clock pulse control gate 58 is closed, thus delivery of output signal being stopped.

In order to extent the number of channels of operation by connecting together a plurality of the subject sequence controllers, the connector 18 of one sequence controller (I) is connected to the connector 19 of another sequence controller (II) as illustrated. When the start switch 5 of the first sequence controller is depressed, the photo coupler 124 in the second sequence controller (II) turns on to apply signal 0 to the 3-input NAND gate 36. This will result in the same operation as the start switch 5 of the second sequence controller (II) is depressed. Thus, both the controllers will provide output signals in synchronism with each other. With two sequence controllers connected together at their connectors, data for 32 channels are obtainable, while by connecting together three such sequence controllers, data for 48 channels of operation are provided; in both cases, the output signals are delivered in parallel.

In case two sequence controllers are interconnected, when the external abnormality detection circuit detects an abnormality with the result that the first sequence controller (I) stops outputting, the second sequence controller (II) also should stop outputting at the same time. As shown in Fig. 14, the first sequence controller (I) is connected at the connector 17 thereof to the connector 16 of the second sequence controller (II). When the external abnormality detection circuit detects any abnormality, the photo coupler 123 turns on so that the output of the 3-input NAND gate 62 goes to 1. Thus, signal 1 is applied through an inverter 125 to a 2-input NOR gate 126 of which another input is connected to the output of the power failure detection circuit. Thus, the signal level at the other input will be 0. Namely, both the inputs of the 2-input NOR gate 62 are 0 so that the gate will provide an output 1. As a result, an inverter 127 will deliver 0. In this way, the photo coupler 123 in the second sequence controller (II) turns on, while the 3-input NAND gate 62 will deliver 1 to close the read clock pulse control gate 58 through the 2-input NAND gate 79, 3-input NAND gate 80 and flip-flop 61. Thus, the delivery of data from the sequence controllers (I) and (II) is stopped simultaneously.

Fig. 15 shows another embodiment of the present invention in which a presettable up counter 142 is employed in place of such binary counter 42 as shown in Figs. 5 and 12.

In writing, when the write (W) switch 6 is depressed, the output of the 2-input NAND gate 86 will be 0, applying 1 to the reset input R of said presettable up counter 142 through the inverter to clear the count in the up counter 142. When a first write clock pulse arrives from the clock line C, the 10 address lines (write timing clock pulses are 1,000 in number) will be "0000000001" to address the first address cell in the memory. Similarly, when the 1,000th clock pulse arrives, the address lines will be "1111101000" in binary number to address the 1,000th address cell in the memory. Data will be written into such address cells.

At time of read, with the start switch 5 depressed, the 2-input NOR gate 39 will deliver a one-shot pulse 1 which is applied to the Preset Enable input PE of said presettable up counter 142 to preset the count in this counter. Thus, the address lines will be "0000000001" in binary number (with the preset input P1 connected to $V_D$ and Q1, Q2, Q3 ... Q10 connected to the ground) to address the first address cell. When a first write clock pulse arrives at the clock line C, the address lines change to "0000000010" in binary number, thus addressing the second address cell. Similarly, when 1,000th clock pulse is received, the 1,000th address cell is addressed. For this while, the data "1" in the first address cell is delivered at the data output. On the other hand, at the end of the 1,000th clock pulse, the 10 address lines change to "1111101001" in binary number, and at the same time, the multi-input NAND gate 77 which receives as inputs the address lines Q4, Q6, Q7, Q8, Q9 and Q10, will deliver a cycle end signal "1". With this signal, the presettable up counter is preset, and the count becomes "0000000001" in binary number. Here the above operation is repeated.

Fig. 16 shows in the form of block diagram a memory array in which four N words×1 bit memories are built in parallel; Fig. 17 shows the block diagram of a memory array in which eight words×1 bit memories are built in parallel; and Fig. 18 shows a block diagram of a memory array in which 16 N words×1 bit memories are built in parallel.

By incorporating a counter 42 in each of said memories (not shown), the address pins Q1, Q2, ... Qn become unnecessary. Thus, the number of memory address pins may be markedly reduced, which will be one of the great advantages of the present invention.

Fig. 19 shows in the form of block diagram a memory array in which eight N words×1 bit memories incorporating a presettable up counter 142 are arranged.

In the illustration, the reference symbol C depicts a clock pulse input pin, S1 and S2 are one-cycle end output pins, respectively of which S1 is for one cycle composed of 100 clock pulses, while S2 is for one cycle composed of 1,000 clock pulses. The number of these pins may be increased or reduced as necessary. Similarly to this case, a memory for 16 channels may be configured.

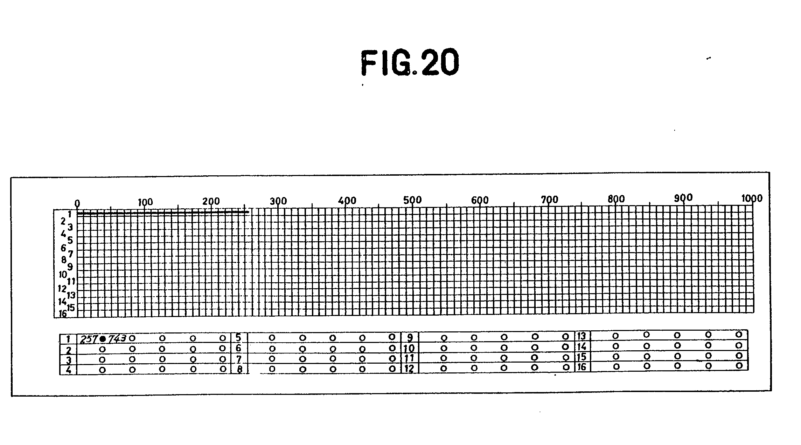

Fig. 20 shows a memory sheet for use with 1,000 write timing clock pulses. With this memory sheet, it is possible to control an operation sequence more precisely as compared with the memory sheet shown in Fig. 2.

Probability of industrial exploitation

The sequence control system according to the present invention is very compact and of high performance, and with this system those who unskilled in the art can program extremely easily and rapidly program data for sequence control and modify the program once made. Therefore, the present invention facilitates greatly the automation of the machines in wide field of industry, and thus saves labor to significant extent. The present invention also contributes very much to energy saving.

**Claims**

1. A sequence controller having a number of parallel connected outputs for the automatic control of a number of machines each connected to one of the outputs wherein in the "read" mode of the controller each machine is driven by a sequence of binary data ("0" and "1") stored in a memory (M1, M2 ... M16) the number of which data is the same in each cycle of operation for each machine and wherein in the "write" mode of the controller the squence of said binary data "0" and "1") is written into the memory (M1, M2 ... M16), comprising:

— a clock pulse generating circuit (11, 69, 70)
— a "1" writing switch (3) and a "0" writing switch (4)
— a read start switch (5)
— a binary counter (42, 142)
— at least one memory (M1, M2, ... M16) connected to said binary counter (42, 142) so as to be addressed thereby
— gate means (71, 73) for controlling said binary counter (42, 142) by operating said read start switch (5)

characterized in that it comprises:

— a keyboard switch (2) for presetting a number of said binary data ("0" and "1")
— an encoder (87, 105) connected to said keyboard switch (2) for converting said number into the corresponding BCD coded signal
— at least one shift register (45, 46, 46') connected to the output of said encoder (87, 105)
— a presettable counter (53, 54, 54'), the preset inputs of which are connected to the shift register (45, 46, 46') and the clock input of which is connected to said clock pulse generating circuit (11, 69, 70) for counting the number of clock pulses preset by the keyboard switch (2)
— first gate means (51, 52) for presetting the presettable counter (53, 54, 54') by operating said "1" writing switch (3) or said "0" writing switch (4)
— second gate means (71, 73) for controlling the counting of said presettable counter (53, 54, 54') by operating said "1" writing switch (3) and said "0" writing switch (4)
— third gate means (59, 72) connected between the output of said presettable counter (53, 54, 54') and said second gate means (71, 73) for closing said second gate means (71, 73) when the counting of said presettable counter (53, 54, 54') reaches the preset number and
— fourth gate means (58, 77) connected between the output of said binary counter (42, 142) and said second gate means (71, 73) for closing second gate means (71, 73) when said binary counter (42, 142) reaches the maximum address count.

2. A sequence controller according to claim 1, characterized in that it comprises a presettable code switch (9, 10) connected to said presettable counter (53, 54, 54') at preset lines thereof (P1, P2, P3, P4), fifth gate means (84) for opening the gate of said presettable code switch (9, 10), and sixth gate means (59, 72, 73) for applying said output of said presettable counter (53, 54, 54') to said binary counter (42, 142) thereby addressing address cells in said memory (M1, M2 ... M16).

3. A sequence controller according to claim 1, characterized in that said first gate means (51, 52) is provided between said "1" writing switch (3) and "0" writing switch (4) and a preset enable terminal (PE) of said presettable counter (53, 54, 54').

4. A sequence controller according to claim 1, characterized in that said second gate means (71, 73) is provided to be operated by releasing said "1" writing switch (3) or "0" writing switch (4) for supplying the clock pulses to said presettable counter (53, 54, 54') and to said binary counter (42, 142).

5. A sequence controller according to claim 1, in which keyboard switch means (2) is characterized in that the keys 1 to 9 of the keyboard switch (2) are connected to the decimal code input terminals (Q1, Q2 ... Q9) of an encoder (87) and to a multi-input gate (88), the output of which is applied to the clock line (C) of the shift register (45, 46, 46') through a delay circuit (92) and a one shot pulse generating circuit (93).

6. A sequence controller according to claim 2, characterized in that the number of binary data in one cycle is 100, in that the outputs of the clock pulse generating circuit (11, 69, 70) are 1000 Hz, 100 Hz and 5/3 Hz, and in that the outputs of the clock pulse generating circuit (11, 69, 70) are fed to said second gate means (71, 73).

7. A sequence controller according to claim 2, characterized in that the number of the binary data in one cycle is 1000, in that the outputs of the clock pulse generating circuit (11, 69, 70) are 10,000 Hz, 1000 Hz and 50/3 Hz and in that the outputs of the clock pulse generating circuit (11, 69, 70) are fed to said second gate means (71, 73).

**Patentansprüche**

1. Folgesteuerung mit einer Anzahl parallel angeschlossener Ausgängs zur automatischen Steuerung einer Anzahl Maschinen, die je an einen der Ausgänge angeschlossen sind, wobei im "Lese" modus der Steuerung jede Maschine durch eine Folge von in einem Speicher (M1, M2 ... M16) gespeicherten binären Daten ("0" und "1") angesteuert wird, deren Anzahl in jedem Arbeitszyklus für jede Maschine dieselbe ist, und wobei im "Schreib" modus der Steuerung die Folge der binären Daten ("0" und "1") in den Speicher (M1, M2 ... M16) eingeschrieben wird, mit:

— einem Taktimpulserzeugerschaltkreis (11, 69, 70)
— einem "1"-Schreibschalter (3) und einem
— einem "1"-Schreibschalter (3) und einem "0"-Schreibschalter (4)
— einem Lesestartschalter (5)
— einem Binärzähler (42, 142)
— wenigstens einem Speicher (M1, M2 ... M16), der mit dem Binärzähler (42, 142) verbunden ist, um dadurch adressiert zu werden
— Gattermitteln (71, 73) zur Steuerung des Binärzählers (42, 142) durch Betätigung des Lesestartschalters (5)

dadurch gekennzeichnet, daß sie:

— einen Tastaturschalter (2) zum vorherigen Festlegen einer Anzahl der binären Daten ("0" und "1")

— einen mit dem Tastaturschalter (2) verbundenen Codierer (87, 105) zum Umwandeln der genannten Anzahl in ein entsprechendes BCD-codiertes Signal

— wenigstens ein mit dem Ausgang des Codieres (87, 105) verbundenes Schiebéregister (45, 46, 46')

— einen voreinstellbaren Zähler (53, 54, 54'), dessen Voreinstelleingänge mit dem Schieberegister (45, 46, 46') verbunden sind und dessen Takteingang mit dem Taktimpulserzeugerschaltkreis (11, 69, 70) zum Zählen der durch den Tastaturschalter (2) festgelegten Anzahl Tatimpulse verbunden ist

— erste Gattermittel (51, 52) zur Voreinstellung des voreinstellbaren Zählers (53, 54, 54') durch Betätigung des "1"-Schreibschalters (3) oder des "0"-Schreibschalters (4)

— zweite Gattermittel (71, 73) zur Steuerung der Zählung des voreinstellbaren Zählers (53, 54, 54') durch Betätigung des "1"-Schreibschalters (3) und des "0"-Schreibschalters (4)

— zwischen dem Ausgang des voreinstellbaren Zählers (53, 54, 54') und den zweiten Gattermitteln (71, 73) angeschlossene dritte Gattermittel (59, 72) zum Schließen der zweiten Gattermittel (71, 73), wenc die Zählung des voreinstellbaren Zählers (53, 54, 54') die vorher festgelegte Anzahl erreicht, und

— zwischen dem Ausgang des Binärzählers (42, 142) und den zweiten Gattermitteln (71, 73) angeschlossene vierte Gattermittel (58, 77) zum Schließen der zweiten Gattermittel (71, 73), wenn der Binärzähler (41, 142) die maximale Adressenzählung erreicht, umfaßt.

2. Folgesteuerung nach Anspruch 1, dadurch gekennzeichnet, daß sie einen voreinstellbaren Codeschalter (9, 10), der mit dem voreinstellbaren Zähler (53, 54, 54') an Voreinstelleitungen (P1, P2, P3, P4) hievon verbunden ist, fünfte Gattermittel (84) zum öffnen des Steueranschlusses des voreinstellbaren Codeschalters (9, 10) und sechste Gattermittel (59, 72, 73) zum Anlegen des Ausgangs des voreinstellbaren Zählers (53, 54, 54') an den Binärzähler (42, 142), wodurch Adresszellen im Speicher (M1, M2 . . . M16) adressiert werden, umfaßt.

3. Folgesteuerung nach Anspruch 1, dadurch gekennzeichnet, daß die ersten Gattermittel (51, 52) zwischen dem "1"-Schreibschalter (3) und "0"-Schreibschalter (4) und einem Voreinstell-Freigabe-Anschluß (PE) des voreinstellbaren Zählers (53, 54, 54') vorgesehen sind.

4. Folgesteuerung nach Anspruch 1, dadurch gekennzeichnet, daß die zweiten Gattermittel (71, 73) zur Betätigung durch Auslösen des "1"-Schreibschalters (3) oder "0"-Schreibschalters (4) vorgesehen sind, um die Taktimpulse dem voreinstellbaren Zähler (53, 54, 54') und dem Binärzähler (42, 142) zuzuführen.

5. Folgesteuerung nach Anspruch 1, bei der das Tasturschaltermittel (2) dadurch gekennzeichnet ist, daß die Tasten 1 bis 9 des Tastaturschalters (2) mit den Dezimalcode-Eingangsanschlüssen (Q1, Q2 . . . Q9) eines Codierers (87) und mit einer Mehrfacheingangs-Torschaltung (88) verbunden sind, deren Ausgang an die Taktimpulsleitung (C) des Schiebregisters (45, 46, 46') über einen Verzögerungskreis (92) und einen Einzelimpuls-Impulserzeugerschaltkreis (93) gelegt ist.

6. Folgesteuerung nach Anspruch 2, dadurch gekennzeichnet, daß die Anzahl der binären Daten in einem Zyklus 100 ist, daß die Ausgänge des Taktimpulserzeugerschaltkreises (11, 69, 70) 1000 Hz, 100 Hz und 5/3 Hz sind, und daß die Ausgänge des Taktimpulserzeugerschaltkreises (11, 69, 70) an die zweiten Gattermittel (71, 73) geführt sind.

7. Folgesteuerung nach Anspruch 2, dadurch gekennzeichnet, daß die Anzahl der binären Daten in einem Zyklus 1000 ist, daß die Ausgänge des Taktimpulserzeugerschaltkreises (11, 69, 70) 10000 Hz, 1000 Hz und 50/3 Hz sind, und daß die Ausgänge des Taktimpulserzeugerschaltkreises (11, 69, 70) an die zweiten Gattermittel (71, 73) geführt sind.

**Revendications**

1. Dispositif de commande de séquence comportant une pluralité de sorties branchées en parallèle destiné à la commande automatique d'une pluralité de machines reliées chacune à une des sorties, dans lequel, dans le mode "lecture" du dispositif de commande, chaque machine est pilotée par une séquence de données binaires ("0" et "1") mémorisées dans une mémoire (M1, M2 . . . M16), le nombre desdites données étant le même dans chaque cycle d'opération pour chaque machine, et dans lequel, dans le mode "écriture" du dispositif de commande, la séquence desdites données binaires ("0" et "1") est écrite dans la mémoire (M1, M2 . . . M16), ledit dispositif de commande comprenant:

— un circuit générateur d'impulsions d'horloge (11, 69, 70)

— un commutateur d'écriture de "1" (3) et un commutateur d'écriture de "0" (4)

— un commutateur de début de lecture (5)

— un compteur binaire (42, 142)

— au moins une mémoire (M1, M2 . . . M16) branchée sur ledit compteur binaire (42, 242) de manière à être adressée par ce dernier

— un organe porte (71, 73) destiné à commander ledit compteur binaire (42, 142) en actionnant ledit commutateur de début de lecture (5)

caractérisé en ce qu'il comprend:

— un commutateur de clavier (2) destiné à prédéterminer un nombre desdites donnéss binaires ("0" et "1")

— un codeur (87, 105) branché sur ledit commutateur de clavier (2) en vue de convertir ledit nombre en un signal correspondant codé en BCD

— au moins un registre à décalage (45, 46, 46') branché à la sortie dudit codeur (87, 105)

— un compteur préréglable (53, 54, 54') dont les entrées de préréglage sont reliées au registre à décalage (45, 46, 46') et dont l'entrée d'horloge est reliée audit circuit générateur d'impulsions d'horloge (11, 69, 70) en vue de compter le nombre d'impulsions d'horloge préréglé par le commutateur de clavier (2).

— un premier organe porte (51, 52) destiné à prérégler le compteur préréglable (53, 54, 54') en actionnant ledit commutateur d'écriture de "1" (3) ou ledit commutateur d'écriture de "0" (4)

— un second organe porte (71, 73) destiné à commander le comptage dudit compteur préréglable (53, 54, 54') en actionnant ledit commutateur d'écriture de "1" (3) et ledit commutateur d'écriture de "0" (4)

— un troisième organe porte (59, 72) branché entre la sortie dudit compteur préréglable (53, 54, 54') et ledit second organe porte (71, 73) en vue de bloquer ledit second organe porte (71, 73) lorsque le comptage dudit compteur préréglable (53, 54, 50') atteind le nombre prédéterminé et

— un quatrième organe porte (58, 77) branché entre la sortie dudit compteur binaire (42, 142) et ledit second organe porte (72, 73) en vue de bloquer ledit second organe porte (71, 73) lorsque ledit compteur binaire (42, 52) atteint le comptage maximal d'adresses.

2. Dispositif de commande d'une séquence selon la revendication 1, caractérisé en ce qu'il comprend un commutateur de code préréglable (9, 10) branché sur ledit compteur préréglable (53, 54, 54') aux lignes de préréglage (P1, P2, P3, P4) de ce dernier, un cinquième organe porte (84) destiné à débloquer la porte dudit commutateur de codes préréglable (9, 10) et un sixième organe porte (59, 72, 73) destiné à appliquer ladite sortie dudit compteur préréglable (53, 54, 54') audit compteur binaire (42, 142) en adressant de ce fait des cellules d'adresse dans ladite mémoire (M1, M2 . . . M16).

3. Dispositif d'une commande d'une séquence selon la revendication 1, caractérisé en ce que ledit premier organe porte (51, 52) est prévu entre ledit commutateur d'écriture de "1" (3) et ledit commutateur d'écriture de "0" (4) et une borne d'autorisation de préréglage (PE) dudit compteur préréglable (53, 54, 54').

4. Dispositif de commande d'une séquence selon la revendication 1, caractérisé en ce que ledit second organe porte (71, 73) est prévu pour être actionné en libérant ledit commutateur d'écriture de "1" (3) ou ledit commutateur d'écriture de "0" (4) en vue de fournir les impulsions d'horloge au dit compteur préréglable (53, 54, 54') et audit compteur binaire (42, 142).

5. Dispositif de commande d'une séquence selon la revendication 1, dans lequel l'organe de commutation de clavier (2) est caractérisé en ce que les touches 1 à 9 du commutateur de clavier (2) sont reliées aux bornes d'entrée de code décimal (Q1, Q2, . . . Q9) d'un codeur (87) et à une porte à entrées multiples (88), dont la sortie est envoyée à la ligne d'horloge (C) du registre à décalage (45, 46, 46') par l'intermédiaire d'un circuit à retard (92) et d'un circuit générateur d'impulsions monostable (93).

6. Dispositif de commande d'une séquence selon la revendication 2, caractérisé en ce que le nombre de données binaires dans un cycle et de 100, en ce que les sorties du circuit générateur d'impulsions d'horloge (11, 69, 70) sont à 1000 Hz, 100 Hz et 5/3 Hz et en ce que les sorties dudit circuit générateur d'impulsions d'horloge (11, 69, 70) sont envoyées audit second organe porte (71, 60, 73).

7. Dispositif de commande d'une séquence selon la revendication 2, caractérisé en ce que le nombre de données binaires dans un cycle est de 1000, en ce que les sorties du circuit générateur d'impulsions d'horloge (11, 69, 70) sont à 10 000 Hz, 1000 Hz et 50/3 Hz et en ce que les sorties du circuit générateur d'impulsions d'horloge (11, 69, 70) sont envoyées audit second organe porte (71, 73).

0 020 764

# FIG.1

# FIG.2

**0 020 764**

# FIG.3

2

FIG.5

# FIG.6

# FIG.7

# FIG.8

# FIG.9

# FIG.10

# FIG.11

# FIG.4

# FIG.14

(II)                                                 (I)

0 020 764

# FIG.12

# FIG.13

# FIG.15

# FIG.19    FIG.18    FIG.17    FIG.16

FIG.20